# EUROPÄISCHE PATENTANMELDUNG

(11) **EP 0 612 675 A1**
(43) Veröffentlichungstag der Anmeldung: **31.08.1994**
(21) Anmeldenummer: 94102376.4
(22) Anmeldetag: 17.02.1994
(51) Int. Cl.: B65G 23/06

(54) **Zug- und Tragseil für Förderer**

(30) Priorität: 20.02.1993 DE 9302482 U
(71) Anmelder: Sudhop, Helmut, Dipl.-Ing., D-28211 Bremen (DE)
(72) Erfinder: Sudhop, Helmut, Dipl.-Ing., D-28211 Bremen (DE); Kabisch, Gerald, Dr.-Ing., D-04741 Rosswein (DE); Höhn, Carsten, Dipl.-Ing., D-28832 Achim-Uesen (DE)

(57) **Zusammenfassung**

Das Zug- und Tragseil für einen Förderer besteht aus einer Seilkette. Eine Seilkette wird von mehreren Seilkettenstücken gebildet, wobei jedes Seilkettenstück aus einem Seilstück (1) mit an den beiden Enden angeordneten Verbindungsstücken (3,4) besteht. Die Seilkettenstücken werden in Gelenkpunkten miteinander verbunden. Der Antrieb erfolgt über eine Treibscheibe (7), die mit einer Stütz- und Mitnehmerscheibe (8) eine Einheit bildet. Die Treibscheibe (7) weist Aussparungen (9) zur formschlüssigen Aufnahme der als rollenförmige Tragelemente ausgebildeten verlängerten Gelenkverbindungen zwischen den Seilkettenstücken auf.
Um eine einwandfreie Funktion eines derart ausgerüsteten Förderers zu erreichen, sind die Seilkettenstücken in ihrer Länge korrigierbar und die Aussparungen in der Mitnehmerscheibe weisen eine solche Kontur auf, daß bestehende Längendifferenzen selbstätig ausgeglichen werden.

## Beschreibung

Die Erfindung betrifft ein Zug- und Tragseil, das insbesondere zum Transport von Gütern durch einen beispielsweise nach der Patentanmeldung EP 0 552 855 bekannten Förderer geeignet ist.

Als Zug- und Tragmittel werden in Fördergeräten üblicherweise Gurte, Seile oder Ketten eingesetzt. Diese Konstruktionselemente haben systembedingte spezifische Vor- und Nachteile.
Gurte werden an ihren Enden miteinander verbunden und als endloses Fördermittel eingesetzt. In relativ kurzen Abständen sind unterstützende Elemente, wie beispielsweise Tragrollen, erforderlich. Bei der Kombination von horizontalen mit vertikalen oder schrägen Förderwegen kommen spezifische Förderanlagen zur Anwendung. Ist ein Gurt beschädigt, wird er entweder komplett ausgewechselt oder er wird repariert.
Letzteres ist insbesondere bei längeren Förderern üblich. Beides ist relativ aufwendig.
Ketten haben, bezogen auf die Zugkraft, ein hohes spezifisches Eigengewicht. Sie unterliegen einem großen Verschleiß, sind lärmintensiv und durch den unvermeindlichen Polygoneffekt der vielen kurzen Glieder an den Antriebs- und Umlenkrädern treten oft hohe störende Erregerfrequenzen auf. Die Kettengeschwindigkeiten können deshalb nur sehr gering gewählt werden. Außerdem sind Ketten sehr starre, unelastische Bauelemente, was in Fördergeräten oft nachteilig ist.
Seile haben in Fördergeräten den Nachteil, daß bei einem örtlichen Schaden das gesamte Seil ausgewechselt werden muß. Außerdem ist die Herstellung von Endlosseilen, wie sie in Stetigförderern oft verwendet werden, teuer und mit großen Herstellungstoleranzen verbunden. Seile benötigen aufgrund des kraftschlüssigen Antriebes sehr große Vorspannkräfte und haben keine definierten Lastanschlagpunkte. Sämtliche Lasteinleitungen können nur durch kraftschlüssige Klemmvorrichtungen realisiert werden. Diese sind aufwendig, schädigen durch ihre örtliche Preßwirkung das Seil und verursachen somit einen übermäßigen Verschleiß.

Hier will die Erfindung durch die Verwendung einer Seilkette, die aus mehreren gleichartigen Seilkettenstücken besteht, Abhilfe schaffen.

Das in den Ansprüchen 1 und 3 offenbarte Seilkettenstück ist ein elastisches Konstruktionselement mit definierter Länge, welches aus einem Seilstück besteht, an dessen beiden Enden jeweils ein Verbindungsstück angeordnet ist. Dadurch ist es möglich, aus mehreren Seilkettenstücken eine Seilkette in der benötigten Länge zu bilden, die Längentoleranzen der gesamten Seilkette klein zu halten bzw. die Länge exakt einzustellen und bei Beschädigungen einzelne Seilkettenstücke auszuwechseln.

Die Verbindungsstücke sind in geeigneter Weise durch bekannte Arbeitstechniken wie beispielsweise Verpressen oder Vergießen mit dem Seil verbunden und mit einem Auge versehen.
Bei Bedarf ist es auch möglich, in einem Verbindungsstück eine Verstelleinrichtung zu integrieren, um die Länge der Seilkette einstellen bzw. ändern oder korrigieren zu können.
Das so zusammengefügte Zug- und Tragseil wird durch einen im Patentanspruch 1 offenbarten Antrieb betätigt. Die mittels der formschlüssigen Verbindung der Aussparung in der Mitnehmerscheibe mit den Achsen realisierte Übertragung gewährleistet eine sichere Funktion. Die Aussparung kann bei geringen Seilzügen und hoher Treibfähigkeit sowie nicht erforderlicher selbstjustierender Wirkung entfallen. Derartig, nach Anspruch 4, ausgebildete Rollen sind auch als Stütz- und Ümlenkrollen verwendbar.
Bei einem erfindungsgemäßen Zug- und Tragseil werden die Vorteile einer Kette und eines Seiles miteinander kombiniert. So können die hohen Festigkeits- und guten Laufeigenschaften eines Seiles und die Auswechselbarkeit einzelner Stücke in vorteilhafter Weise genutzt werden.

Im folgenden wird die Erfindung anhand eines Ausführungsbeispiels und mit Bezug auf die beiliegenden Zeichnungen näher erläutert, wobei
- Figur 1: ein längenverstellbares Seilkettenstück,
- Figur 2: einen Antrieb für das Zug- und Tragseil in der Seitenansicht,
- Figur 3: den Antrieb nach Figur 2 im Schnitt,
- Figur 4: einen Antrieb mit einer Stützscheibe ohne Aussparungen im Schnitt und
- Figur 5: eine aus einer Seilrolle mit einer Stützscheibe bestehende Umlenkrolle im Schnitt zeigt.

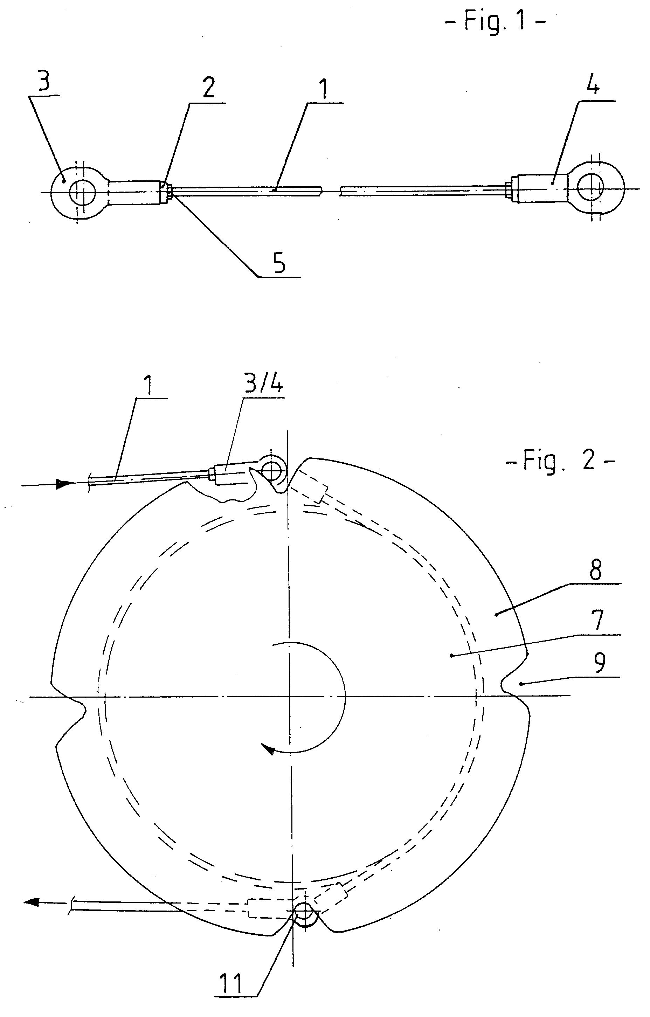

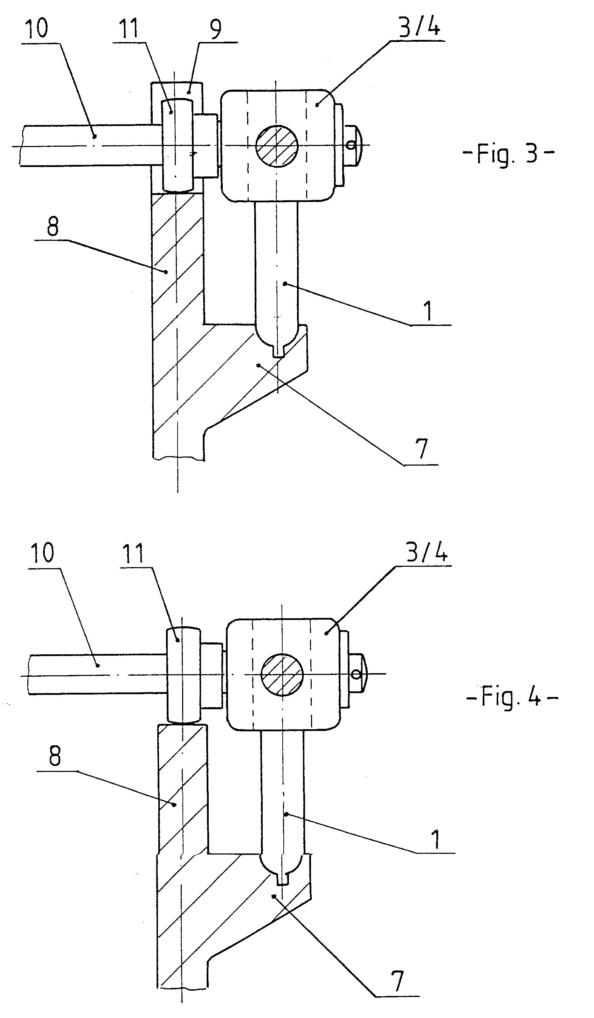

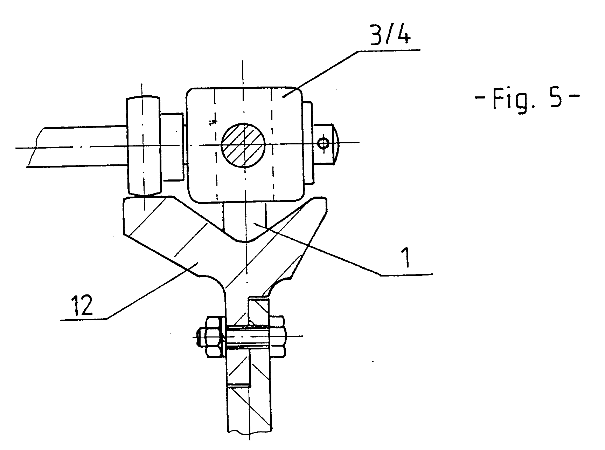

Nach Figur 1 besteht jedes längenverstellbare Verbindungsstück hauptsächlich aus einem Seilstück 1 und zwei Verbindungsstücken 3,4 mit Durchgangsbohrungen. Das Verbindungsstück 3 ist gabelförmig und das Verbindungsstück 4 flach ausgebildet. Beide Enden des Seilstücks 1 sind im Ausführungsbeispiel durch eine mit einem Schraubzapfen versehene Preßhülse 2 versehen, auf die ein Verbindungsstück 3,4 aufgeschraubt wird. Zur Feststellung des in das Verbindungsstück 3 geschraubten Schraubenzapfens 2 ist eine Kontermutter 5 vorgesehen. Sie verhindert ein selbstätiges Lösen der Verbindung. Durch diese Verstelleinrichtung ist ein Ausgleich der herstellungsbedingten Längentoleranzen und der im Betrieb auftretenden Seildehnung möglich.
Der Antrieb nach den Figuren 2 und 3 besteht aus einer Treibscheibe 7, die mit einer Stütz- und Mitnehmerscheibe 8 kombiniert ist.
Beim Antrieb einer einzelnen Seilkette sind die Verbindungsstücke 3,4 in den Gelenkpunkten mit einer Achse und zwei rollenförmigen Tragelementen 11 versehen, die rechts und links der Seilkette symmetrisch angeordnet werden. Die Treibscheibe 7 ist dann mit zwei Stütz- und Mitnehmerscheiben 8 ausgebildet. Nach Fig. 3 wird bei einer Doppelseilanordnung die Achse 10 gleichzeitig als Verbindungselement der beiden Kettenseilstränge benutzt. Auch bei dieser Anordnung sind die rollenförmigen Tragelemente 11 doppelt vorhanden.
Die Stütz- und Mitnehmerscheibe 8 ist mit Aussparungen 9 versehen, welche die rollenförmigen Tragelemente 11, die in den Gelenkpunkten der Gliederseile auf der Achse 10 befestigt sind und im Ausführungsbeispiel aus genormten Y-Kugellagern mit Exzenter bestehen, aufnehmen.
Nach Fig. 2 ist in Abhängigkeit von der Drehrichtung bei der oberen Aussparung 9 die Zentrier- und Einlaufphase und bei der unteren Aussparung 9 die Auslaufphase der Gliederkette vor dem Justiervorgang dargestellt.
Bei geringen Seilzügen, hoher Treibfähigkeit oder, wenn eine Justierung beim überrollen nicht erforderlich ist, kann nach Fig. 4 der Einsatz einer glatten Stützscheibe 8 vorgesehen werden. So ausgebildete Baugruppen eignen sich auch für eine Verwendung als antriebslose Umlenk- oder Stützrollen.
Nach Fig. 5 ist hierfür eine spezielle Lösung dargestellt, bei der eine Seilrolle mit einer am Außendurchmesser des Rollengrundkörpers angeschraubte Stützscheibe 12 Verwendung findet. Die Stützscheibe 12 dient hier lediglich dazu, ein Anheben des Seilstranges 1 beim Überrollen der Trag- und Umlenkrolle durch die Verbindungsstücke 3 und 4 zu ermöglichen. Die Durchmesser der beiden Teilkreise sind in Abhängigkeit von der festgelegten Teilung und der Länge der Verbindungsstücke 3 und 4 aufeinander abgestimmt.
Bei der bereits beschriebenen Stütz- und Mitnehmerscheibe 8 mit Aussparungen 9 wird durch die speziell ausgebildete Form und Größe dieser Aussparungen 9 in Abstimmung mit dem Tragelement 11 gewährleistet, daß bei jeder Überrollung der Treibscheibe 7 durch die Verbindungsstücke 3 und 4 die Seilkette so weit angehoben wird, daß das Seil 1 mit den Verbindungsstücken 3 und 4 geradlinig und ohne Berührung über die Treibscheibe 7 geführt wird und gleichzeitig eine formschlüssige Kraftübertragung stattfindet. Die Durchmesser der beiden Teilkreise sind in Abhängigkeit von der festgelegten Teilung und der Länge der Verbindungsstücke 3 und 4 aufeinander abgestimmt.
Die Kontur der Aussparung 9 garantiert außerdem, daß beim Einlauf des Tragelementes 11 durch den Formschluß stets eine selbstjustierende Wirkung vorhanden ist, die bei möglichen Seildehnungen oder Seilungenauigkeiten ein Nachziehen des gesamten Seilstranges als Schlupf an der Treibscheibe bewirkt und damit während der Anhubphase ein exaktes Einrasten des Tragelementes 11 in die Aussparung 9 erfolgt. Danach übernimmt die kraftschlüssige Verbindung Seil 1 / Treibscheibe 7 wieder den weiteren Antrieb.
Ein Herausspringen ist durch die definierte Kurve der Einlaufkontur ausgeschlossen, und bei jeder Überollung findet eine selbstätige Justierung statt, was insbesondere beim Doppelseilantrieb für den Gleichlauf notwendig ist. Dazu wird die Kurve der Einlaufkontur so gewählt, daß die Resultierende der beiden Seilkräfte in jeder Bewegungsphase des Einlaufes in Richtung auf den Grund der Aussparung 9 gerichtet ist und so ein selbstätiges Einziehen der Tragrolle 11 in die Aussparung 9 bis zum unteren Tragpunkt gewährleistet ist.
Die Anzahl der Aussparungen 9 wird so gewählt, daß immer nur der formschlüssige Eingriff eines Paares der Verbindungsstücke 3 u. 4 bzw. eines Tragelementes 11 erfolgen kann.
Die Ein- und Auslaufkonturen der Kurven einer jeden Aussparung 9 sowie die Seilzugkräfte sind in Abhängigkeit aller Einflußfaktoren so aufeinander abgestimmt, daß der vorgesehene kinematische Ablauf optimal eintritt. Ansonsten könnte ein frühzeitiger Verschleiß oder eine Zerstörung der Seilkette eintreten.

## Patentansprüche

1. Zug- und Tragseil für Förderer, dadurch gekennzeichnet, daß
- der Antrieb durch eine Treibscheibe mit unterschnittener Rundrille (7) und mit Stütz- und Mitnehmerscheibe (8) erfolgt, wobei diese mit Aussparungen (9) zur Aufnahme von Führungsrollen (11) versehen oder gänzlich glatt ist;
- die Aussparungen (9) mit einer speziellen Ein- und Auslaufkontur versehen sind, welche die Tragrollen (11) formschlüssig aufnehmen;
- eine aus mehreren Seilstücken (1) definierter Länge zusammengesetzte Seilkette verwendet wird und
- die einzelnen Seilstücke (1) mit Verbindungsstücken (3,4) versehen und miteinander verbunden sind.

2. Zug- und Tragseil nach Anspruch 1, dadurch gekenzeichnet, daß
- die Seilkette auch in doppelter Ausführung parallel zueinander mit Querverbindungen (10) als Doppelfördersystem eingesetzt wird und
- die Lasteintragung im Tragseil oder in den Gelenkösen (3,4) bzw. Querverbindungen (10) vorgesehen ist.

3. Zug- und Tragseil nach den Ansprüchen 1 und 2, dadurch gekennzeichnet, daß die Verbindungsstücke (3,4) Vorrichtungen zur Längenverstellung der Seilkette enthalten und mit einem überhöhtem Auge versehen sein können.

4. Zug- und Tragseil nach den Ansprüchen 1 bis 3, dadurch gekennzeichnet, daß die Umlenkung bzw. Richtungsänderung mittels einer Stützrolle, die aus einer Seilrolle (7) und einer Stützscheibe(8) besteht, vorgesehen ist und diese Rollen auch als Tragrollen eingesetzt werden.

5. Zug- und Tragseil nach den Ansprüchen 1 bis 4, dadurch gekennzeichnet, daß bei der zweisträngigen Seilkette die Gelenkpunkte mit einem durchgehenden Verbindungselement (10) und rollenförmigen Tragelementen (11) versehen sind.
